**Europäisches Patentamt**

**European Patent Office**

**Office européen des brevets**

(19)

(11) Veröffentlichungsnummer: **0 072 844**
**B1**

(12) # EUROPÄISCHE PATENTSCHRIFT

(45) Veröffentlichungstag der Patentschrift:
23.07.86

(51) Int. Cl.⁴: **D 21 C 11/04**

(21) Anmeldenummer: 82900800.2

(22) Anmeldetag: 26.02.82

(86) Internationale Anmeldenummer:
PCT/EP 82/00040

(87) Internationale Veröffentlichungsnummer:
WO 82/02909 (02.09.82 Gazette 82/21)

(54) **VERFAHREN ZUR ENTFERNUNG VON KIESELSÄURE AUS SCHWARZLAUGE.**

(30) Priorität: 27.02.81 DE 3107447

(43) Veröffentlichungstag der Anmeldung:
02.03.83 Patentblatt 83/9

(45) Bekanntmachung des Hinweises auf die Patenterteilung:
23.07.86 Patentblatt 86/30

(84) Benannte Vertragsstaaten:
AT DE FR SE

(56) Entgegenhaltungen:
DE-A-2 006 313
DE-B-1 119 645
FR-A-2 399 503
GB-A-548 280
GB-A-761 946
US-A-1 606 338

Abstract Bulletin of the Institute of Paper Chemistry, Band 36, Nr. 1, Juli 1965 (Appleton, Wisconsin, US), V.A. Grabovskii u.a. "The balance of silica during kraft pulping of reed and desilicification of black liquor", Seite 66, Zusammenfassung 295
A.B.I.P.C. Band 50, Nr. 4, Oktober 1979, K. Yamada "Treatment of waste liquors from oxygen pulping of nonwood plants", Seite 431, Zusammenfassung 4054
A.B.I.P.C., Band 48, Nr. 9, März 1978, M. Idrees

(73) Patentinhaber: **Kraftanlagen AG., Im Breitspiel 7, D-6900 Heidelberg 1 (DE)**

(72) Erfinder: **QUITTKAT, Wolfram, Pippinstrasse 32, D-8035 Gauting (DE)**
Erfinder: **EZZAT, Sami, Abbachstrasse 27, D-8000 München 50 (DE)**
Erfinder: **BENZINGER, Paul, Döbereinerstrasse 27, D-8000 München 60 (DE)**
Erfinder: **STADLER, Peter, Hauptstrasse 27, D-8011 Hohenlinden (DE)**
Erfinder: **SCHMIDT, Rüdiger, Am Waldrand 33, D-8000 München 70 (DE)**
Erfinder: **BURKHART, Hubertus, Forsthaus, D-6781 Fischbach (DE)**

(74) Vertreter: **Helber, Friedrich G., Dipl.- Ing., Patentanwälte Dipl.- Ing. F. G. Helber Dipl.- Ing. J.K. Zenz Giesser Weg 47, D-6144 Zwingenberg (DE)**

(56) Entgegenhaltungen: (Fortsetzung)
"Desilication of kraft green liquor by carbonation", Seite 1004, Zusammenfassung 9355
TAPPI, Journal of the Technical Association of the Pulp and Paper Industry, Band 62, Nr. 11, 17. November 1979, (Atlanta, GA, US), R. Alén u.a. "Carbon dioxide precipitation of lignin from pine kraft black liquor", Seiten 108-110

## Beschreibung

Die Erfindung betrifft ein Verfahren zur Entfernung von Kieselsäure aus der beim alkalischen Zellstoffaufschluß anfallenden Schwarzlauge mit einer Siliziumdioxydkonzentration von 7 bis 12 g/l, wobei der pH-Wert der Schwarzlauge durch Einleiten von $CO_2$-haltigem Gas auf unter 10 abgesenkt wird, jedoch nur so weit, daß dieser noch im alkalischen Bereich liegt und keine nennenswerte Ligninausfällung eintritt und wobei der abgesetzte Kieselsäureschlamm anschließend abgetrennt wird.

Bei der Zellstoffherstellung aus kieselsäurereichen Einjahrespflanzen, wie Bagasse, Reisstroh, Schilf, Gräsern und dergleichen, finden wegen des hohen Kieselsäuregehaltes bevorzugt alkalische Aufschlußverfahren Anwendung. Um diese Verfahren wirtschaftlich durchführen zu können, müssen die dabei verwendeten Alkalien regeneriert werden. Dies erfolgt durch Eindicken und Verbrennen des organischen Anteiles der Schwarzlauge, durch Auflösen des Verbrennungsrückstandes in Wasser, durch Kaustifizierung der dabei anfallenden alkalischen Lösung und durch anschließendes Brennen des Kaustifizierschlammes in Kalkbrennöfen. Bei dieser Regenerierung bereitet jedoch der hohe Kieselsäuregehalt der Schwarzlauge beträchtliche Schwierigkeiten. Es kommt dadurch in den Eindampf- und Verbrennungsaggregaten zu Silikat-Verkrustungen, die den normalen Verfahrensablauf erheblich stören; außerdem verhindert eine zu große Menge an Calciumsilikat im Kaustifizierschlamm dessen Aufbereitung. Kann jedoch der Kalk nicht rückgewonnen werden, so beeinträchtigt dies in hohem Maße die Wirtschaftlichkeit des Verfahrens.

Zur Abtrennung der Kieselsäure von der alkalischen Lösung wurde bereits vorgeschlagen, in die Schwarzlauge Kohlendioxid einzuleiten, um die Kieselsäure durch die sich hierbei ergebende Absenkung des pH-Wertes gallertartig auszufällen und sie dann durch Kochen oder durch Erhitzen unter Druck in eine filtrierbare kristallinische Masse zu überführen (DE-C-522 730). Eine eingehende Überprüfung ergab jedoch, daß es mit diesem Verfahren nicht möglich ist, die in gallertartiger Form, d.h. als Gel, vorliegende Kieselsäure unter wirtschaftlich durchführbaren Bedingungen von der Lauge zu trennen. Die notwendige Überführung des Gels in eine filtrierbare kristalline Masse durch Kochen bzw. durch Erhitzen unter Druck ist außerordentlich zeit- und energieaufwendig und bedingt damit auch einen hohen anlagentechnischen Aufwand.

Zur Verbesserung dieses Verfahrens wurde des weiteren vorgeschlagen, die Schwarzlauge während der Zugabe des Kohlendioxids bei Temperaturen unterhalb des Siedepunktes und bei gewöhnlichem Druck in ständiger, z.B. durch Umpumpen oder Rühren erzielter, mechanischer Bewegung zu halten, bis feinverteilte Kieselsäure ausfällt, wobei diese nach vorangegangenem Absitzen durch Filtrieren abgetrennt wird (DE-C 1 119 645). Dieser Lösung lag die Erkenntnis zu Grunde, daß auch durch eine Einführung von Kohlendioxid in die Schwarzlauge, das zuvor mit anderen Gasen, z.B. Luft oder Rauchgas, verdünnt wurde, örtliche Übersäuerungen nicht auszuschließen sind, wodurch die gewonnene Kieselsäure durch Ausfällung von Lignin in ihrer Gesamtheit verfärbt und für die Weiterverwendung unbrauchbar wird. Um örtlichen Übersäuerungen entgegenzuwirken, wurde vorgeschlagen, die Schwarzlauge während der Kohlendioxidzufuhr ständig umzupumpen und hierbei einen pH-Bereich für die Ausfällung von 8,0 bis 9,9, vorzugsweise 9,2 bis 9,5 einzuhalten. Hierzu sollte Kohlendioxid nur in einer Quantität zugesetzt werden, daß innerhalb des alkalischen Gebietes noch ein deutlicher Abstand zum Übergang in den sauren Bereich verbleibt. Deshalb wurde zugleich vorgeschlagen, die Kohlendioxideinleitung über einen längeren Zeitraum zu erstrecken. Diese Bedingungen lassen Kieselsäure zuverlässig aus der Schwarzlauge entfernen, erfordern jedoch großtechnisch einen hohen Anlagen- und Energieaufwand.

Der Erfindung liegt daher die Aufgabe zugrunde, unter Vermeidung der geschilderten Mängel ein neuartiges Verfahren zu schaffen, das es gestattet, mit einem wesentlich verringerten anlagentechnischen Aufwand und erheblich kleinerem Energiebedarf eine quantitativ und qualitativ gute Abscheidung der Kieselsäure aus der Schwarzlauge - bei gleichzeitig herabgesetzten Alkaliverlusten - zu erreichen.

Diese Aufgabe wird erfindungsgemäß bei einem Verfahren der im Oberbegriff des Anspruches 1 genannten Art durch folgende Merkmale gelöst:

a) Es findet ein rohrförmiger Strömungsreaktor (1) Verwendung in dessen Einlaßbereich das unter Überdruck stehende $CO_2$-haltige Gas in feiner Verteilung in die Schwarzlauge eingedüst wird;

b) die Schwarzlauge und das $CO_2$-haltige Gas durchsetzen im Gleichstrom den rohrförmigen Strömungsreaktor (1) in einer Zeit von weniger als 10 Minuten, vorzugsweise 2 Minuten, wobei der pH-Wert abgesenkt wird;

c) nach Durchströmen des Strömungsreaktors (1) wird das in der Schwarzlauge enthaltene Restgas in einem Gasabscheider (4) abgeschieden;

d) das Abtrennen des abgesetzten Kieselsäureschlammes erfolgt durch Zentrifugation.

Bei den der Erfindung zugrunde liegenden eingehenden Untersuchungen ergab sich die neue Erkenntnis, daß die Kieselsäure sowohl quantitativ als auch qualitativ umso besser aus der Schwarzlauge ausgefällt wird, je rascher die Absenkung des pH-Wertes durch Einleiten des $CO_2$-haltigen Gases unter Überdruck und in feiner Verteilung durchgeführt wird. Nachprüfungen ergaben nämlich, daß die bei den bekannten Verfahren auftretenden hohen Alkaliverluste, die einen wirtschaftlichen Betrieb bisher unmöglich machten, im wesentlichen auf eine Anlagerung von Natriumionen an das $SiO_2$ zurückzuführen sind. Indem nun erfindungsgemäß das Kohlendioxid in einer Zeit von weniger als 10 Minuten, vorzugsweise 2 Minuten, im Gleichstrom in einem rohrförmigen Strömungsreaktor in die Schwarzlauge eingebracht wird, ergeben sich in der Schwarzlauge örtlich pH-Werte, die unter 10, jedoch im nicht-sauren Bereich, d.h. über 7, liegen und die dazu führen, daß rasch Gelkeime gebildet werden, die ein schnelleres Gelieren der ganzen Kieselsäure bewirken. Indem auf diese Weise die Kieselsäure rasch ausfällt, wird die Möglichkeit einer Anlagerung der Na-Ionen an das $SiO_2$ deutlich verringert, wodurch sich die überraschend kleinen Alkaliverluste ergeben.

Die Festlegung des pH-Wertes, bis auf den abgesenkt wird, erfolgt unter der Berücksichtigung, daß unterhalb eines pH-Wertes von etwa 7 Lignin aus der Schwarzlauge ausfällt, was die Abtrennung der Kieselsäure durch Zentrifugation beeinträchtigt und den Heizwert der Schwarzlauge verringert (letzteres ist nachteilig wegen der erwünschten Ausnutzung des Heizwertes der Schwarzlauge für ihre Verbrennung). Der pH-Wert der Schwarzlauge wird daher nur so weit abgesenkt, daß keine nennenswerten Mengen an Lignin ausfallen.

Durch die erfindungsgemäß vorgesehene Absenkung des pH-Wertes der Schwarzlauge in einer Zeit von weniger als 10, insbesondere 2 Minuten auf unter 10 werden unter Eindüsen von großen Mengen $CO_2$-haltigen Gases unter Überdruck in feiner Verteilung sehr viele Gelierungskeime im rohrförmigen Strömungsreaktor gebildet und damit ein hoher Grad an kondensierter und durch Zentrifugation gut abtrennbarer Kieselsäure in diesem erreicht; zugleich wird jedoch vermieden, daß größere Mengen Lignin mit ausgefällt werden.

Als sehr wichtig für die Absetzgeschwindigkeit der kondensierten Kieselsäure hat es sich erwiesen, daß die Schwarzlauge bei der pH-Wert-Absenkung mit einer $SiO_2$-Konzentration von 7 bis 12 g/l vorliegt. Erforderlichenfalls wird dies durch ein vorheriges Aufkonzentrieren der Schwarzlauge erreicht.

Mit dem erfindungsgemäßen Verfahren kann die Kieselsäure zu einem sehr hohen Prozentsatz (bis zu 98%) aus der Schwarzlauge entfernt werden, ohne daß größere Alkaliverluste auftreten. Nach entsprechender Aufbereitung der weitestgehend kieselsäurefreien Schwarzlauge kann das darin enthaltene Natriumhydroxid wieder dem Kochprozeß zugeführt werden. Es ist damit eine nahezu quantitative Rückgewinnung der alkalischen Koch-Chemikalien möglich, wobei der Heizwertanteil des Lignins in der Schwarzlauge genutzt werden kann.

Von besonderem Vorteil ist bei dem erfindungsgemäßen Verfahren, daß die hierbei einzuhaltenden verfahrenstechnischen Bedingungen auch im großtechnischen Betrieb auf einfache Weise realisiert werden können. Das neue Verfahren ist daher im Unterschied zu den bekannten Verfahren mit gutem technischen und wirtschaftlichen Erfolg durchführbar.

Gemäß einer zweckmäßigen Ausgestaltung der Erfindung wird bei dem erfindungsgemäßen Verfahren die zu Beginn der pH-Wert-Absenkung vorhandene Temperatur der Schwarzlauge während der pH-Wert-Absenkung annähernd beibehalten. Unter "annähernder Beibehaltung" ist hierbei zu verstehen, daß sich die Temperatur der Schwarzlauge während der pH-Wert-Absenkung um maximal bis zu etwa 10°C gegenüber der zu Beginn der pH-Wert-Absenkung vorhandenen Temperatur verringern kann. Indem erfindungsgemäß eine stärkere Absenkung der Temperatur der Schwarzlauge zum Zwecke der pH-Wert-Absenkung vermieden wird, ergibt sich eine wesentlich verbesserte Energiebilanz des gesamten Verfahrens.

Gemäß einer weiteren zweckmäßigen Ausgestaltung der Erfindung erfolgt während der pH-Wert-Absenkung durch gleichzeitige Wärmezufuhr eine Aufkonzentration der Schwarzlauge. Diese Wärmezufuhr kann durch Einleiten der $CO_2$-haltigen Rauchgase eines vorzugsweise mit schwefelfreiem Brennstoff beheizten Brenners erfolgen. Wird auf diese Weise die Absenkung des pH-Wertes mit einer Eindampfung der Schwarzlauge kombiniert, so läßt sich damit sehr einfach - in Abhängigkeit vom $SiO_2$- bzw. Trockensubstanz-Gehalt der Schwarzlauge - der optimale Bereich der pH-Wert-Absenkung einstellen; zugleich kann auf diese Weise eventuell der sonst notwendige Verfahrensschritt der Vakuum-Eindampfung der von der Kieselsäure befreiten Schwarzlauge (vor dem Ausbrennen der Schwarzlauge) eingespart werden.

Für die Abtrennung des abgesetzten Kieselsäureschlammes durch Zentrifugation können sowohl Dekantierzentrifugen als auch Separatoren eingesetzt werden.

Die Art und damit die Abtrennbarkeit der bei der Absenkung des pH-Wertes ausfallenden Kieselsäure kann durch Flockungsmittel vorteilhaft beeinflußt werden.

Diese Flockungsmittel werden der Schwarzlauge vor oder nach der Absenkung des pH-Wertes, jedoch vor der Zentrifugation, zweckmäßig in feinkörniger Form zugesetzt.

In einfachster Form kann als Flockungsmittel bereits abgetrennter, vorzugsweise getrockneter oder geglühter Kieselsäureschlamm Verwendung finden.

Die Absetzgeschwindigkeit der Kieselsäure wird besonders durch Flockungsmittel auf kationischer Basis erhöht, vorzugsweise durch Verwendung von Kationen hoher Ladungsdichte, wie $Fe^{3+}$, $Al^{3+}$ $Ca^{2+}$

Ist eine Nutzung des abgetrennten Kieselsäureschlammes beabsichtigt, soll etwa die sehr reine Kieselsäure nach Glühen als Füllstoff bei der Papierherstellung eingesetzt werden, so finden zweckmäßig Flockungsmittel auf organischer Basis Verwendung.

Eine weitere zweckmäßige Ausgestaltung des erfindungsgemäßen Verfahrens sieht vor, daß die Absenkung des pH-Wertes der Schwarzlauge in wenigstens zwei Stufen erfolgt, wobei das Kohlendioxid in der zweiten Stufe in feinerer Verteilung als in der ersten Stufe in die Schwarzlauge eingebracht wird. Eine solche Verfahrensweise trägt dem Umstand Rechnung, daß mit zunehmender Absenkung des pH-Wertes die weitere PH-Wert-Verringerung eine intensivere Reaktion des Kohlendioxids mit der Schwarzlauge erfordert.

Wie eingangs bereits erwähnt, wird die Schwarzlauge nach Absenkung ihres PH-Wertes und Abtrennung des abgesetzten Kieselsäureschlammes üblicherweise einer mehrstufigen Eindampfung unterworfen, ehe das Ausbrennen der Schwarzlauge und anschließend die Kaustifizierung erfolgt. Gemäß einer zweckmäßigen Ausgestaltung der Erfindung kann nun zwischen wenigstens zwei derartigen Eindampfstufen eine weitere Entkieselung der Schwarzlauge (durch Absenken des pH-Wertes und Abtrennen des abgesetzten Kieselsäureschlammes mittels Zentrifugation) erfolgen. Durch eine solche weitere Entkieselung der Schwarzlauge zwischen zwei Eindampfstufen wird die Kieselsäurekonzentration erhöht und damit die Gelkondensation begünstigt. Man erreicht auf diese weise einen besonders hohen Entkieselungsgrad. Dadurch werden nicht nur Verkrustungen in der Eindampfanlage sowie Betriebsstörungen im Kalkbrennofen vermieden, sondern es werden auch die Calcium-Verluste (in Form von Calciumsilikat) erheblich gesenkt und eine nahezu quantitative Rückgewinnung des für die Kaustifizierung eingesetzten Kalks ermöglicht.

Für die Einführung des $CO_2$ in die Schwarzlauge zum Zwecke der raschen Absenkung des pH-Wertes ist es wesentlich daß das $CO_2$ in Form feinster Bläschen in die Schwarzlauge eingeführt wird. Erfindungsgemäß als vorteilhaft hat sich die Verwendung eines von Schwarzlauge und $CO_2$-haltigem Gas im Gleichstrom durchsetzten, rohrförmigen Strömungsreaktors erwiesen, der im Bereich seiner Einlaßseite mit einer Einrichtung (beispielsweise einem Düsenboden) versehen ist, durch die das $CO_2$-haltige Gas mit einem geeigneten Vordruck (z.B. von 0,5 bis 1,0 bar) in feiner Verteilung über eine große Oberfläche in den Strömungsreaktor eingeführt wird. Man erreicht bei dieser Anordnung einen Wirkungsgrad der $CO_2$-Absorption von über 90%, so daß die Absenkung des pH-Wertes und die Gelkondensation der Kieselsäure in wenigen Sekunden erfolgt. Die Abtrennung des abgesetzten Kieselsäureschlammes durch Zentrifugation ist bei diesem Verfahren besonders einfach und wirkungsvoll durchzuführen.

Zur weiteren Erläuterung der Erfindung seien im folgenden eine Vorrichtung zur Durchführung des Verfahrens sowie einige Verfahrensbeispiele erläutert.

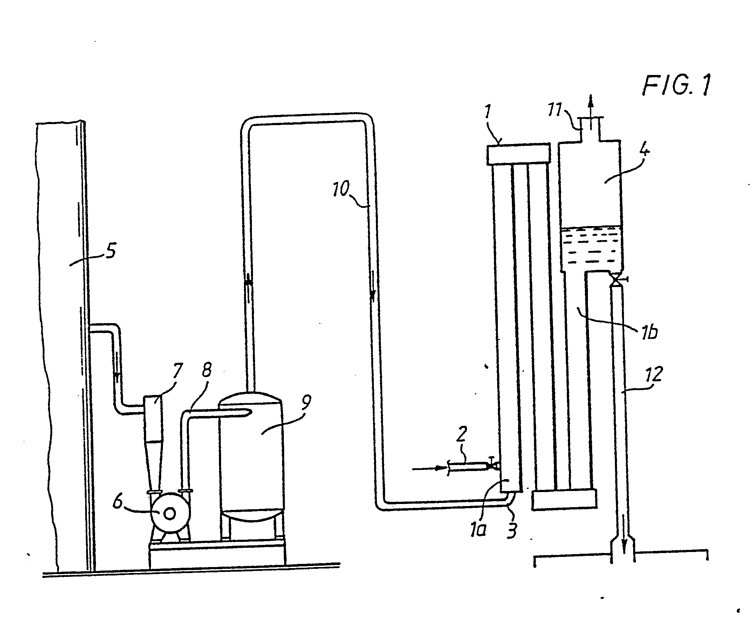

Fig. 1 zeigt eine Anlage, bei der zur Absenkung des pH-Wertes der Schwarzlauge ein rohrförmiger Strömungsreaktor 1 vorgesehen ist. Die Einlaßseite 1a des Strömungsreaktors 1 ist mit einer Zuführung 2 für die Schwarzlauge und mit einem Anschluß 3 für $CO_2$-haltiges Rauchgas versehen. Die Auslaßseite 1b des Strömungsreaktors 1 ist an einen Gasabscheider 4 angeschlossen.

Das Rauchgas wird aus einem Kamin 5 durch einen Flüssigkeitsverdichter 6 über eine Saugleitung 7 angesaugt und gekühlt. Als Kühl- und Betriebsflüssigkeit wird Schwarzlauge verwendet. In der Saugleitung 7 findet aufgrund der Temperaturdifferenz zwischen dem Rauchgas und der Kühl- und Betriebsflüssigkeit eine Abkühlung des Rauchgases statt. Das gekühlte und verdichtete Rauchgas wird zusammen mit der Betriebsflüssigkeit über eine Druckleitung 8 einem Flüssigkeitsabscheider 9 zugeführt. Das verdichtete Rauchgas gelangt über eine Leitung 10 zum Strömungsreaktor 1.

Das Rauchgas wird durch eine (im einzelnen nicht dargestellte) Begasungseinrichtung, die eine gleichmäßige Gasverteilung im Strömungsreaktor 1 mit großer spezifischer Oberfläche bewirkt (beispielsweise über einen Düsenboden) in den Strömungsreaktor 1 eingedüst. Die Schwarzlauge gelangt über die Zuführung 2 in den Strömungsreaktor 1. Im Strömungsreaktor wird dem Rauchgas das für die Absenkung des pH-Wertes der Schwarzlauge erforderliche $CO_2$ entzogen. Das Restgas, überwiegend Stickstoff, wird im Gasabscheider 4 von der Schwarzlauge getrennt und über eine Rohrleitung 11 ins Freie entlassen. Die Schwarzlauge wird über die Rohrleitung 12 abgezogen.

**Beispiele**

1. Einstufige Absenkung des pH-Wertes und Zentrifugation
Daten der Schwarzlauge vor der einstufigen Entkieselung:
Trockensubstanz 8% = 80 g/l
$SiO_2$-Gehalt 0,9% = 9 g/l
NaOH-Gehalt 1,6% = 16 g/l
pH-Wert 10,8
Temperatur 64°C
Menge 5 m$^3$
Verwendung eines Strömungsreaktors gemäß Fig. 1.
$CO_2$-Gehalt im Rauchgas 10%
Rauchgasmenge 1700 m$^3$
Druck 0,7 bar
Dauer der pH-Wert-Absenkung (Durchlaufzeit der Schwarzlauge durch den Strömungsreaktor) 2 Minuten
$CO_2$-Gehalt im Rauchgas nach der Begasung 1% Wirkungsgrad des Strömungsreaktors 90%

Temperatur der Schwarzlauge nach der Absenkung 62°C

pH-Wert nach der Absenkung 8,6

Anschließend wird die gesamte Schwarzlauge über eine Zentrifuge geleitet.

Werte der Schwarzlauge nach Zentrifugation:

Ligninverlust 2% NaOH-Verlust 0,5%

SiO$_2$-Gehalt 0,02% = 0,2 g/l

(entspricht einem Entkieselungsgrad von rd. 98%)

2. Einfluß der Zugabe von Flockungsmitteln auf die Schlammabtrennung:

2.1 Ohne Flockungsmittel:

Daten der Schwarzlauge nach der Absenkung des pH-Wertes auf 8,6:

Temperatur 62°C

SiO$_2$-Gehalt (gesamt) 0,9 % = 9 g/l

Es wird sofortige Abtrennung der Kieselsäure durch Zentrifugation erreicht (Entkieselungsgrad 89%).

2.2 Mit Flockungsmittel:

Daten der Schwarzlauge wie unter Ziff.2.1, jedoch mit Zugabe von 0,9 g/l getrocknetem und feinkörnigem Kieselsäureschlamm pro m³ Schwarzlauge.

Nach Abtrennung durch Zentrifugation erreicht man sofort einen Entkieselungsgrad von 92%.

## Patentansprüche

1. Verfahren zur Entfernung von Kieselsäure aus der beim alkalischen Zellstoffaufschluß anfallenden Schwarzlauge mit einer SiO$_2$-Konzentration von 7-12 g/l, wobei der pH-Wert der Schwarzlauge durch Einleiten von CO$_2$-haltigem Gas auf unter 10 abgesenkt wird, jedoch nur so weit, daß dieser noch im alkalischen Bereich liegt und keine nennenswerte Ligninausfällung eintritt und wobei der abgesetzte Kieselsäureschlamm anschließend abgetrennt wird, gekennzeichnet durch folgende Merkmale:

a) Es findet ein rohrförmiger Strömungsreaktor (1) Verwendung, in dessen Einlaßbereich das unter Überdruck stehende CO$_2$-haltige Gas in feiner Verteilung in die Schwarzlauge eingedüst wird;

b) die Schwarzlauge und das CO$_2$-haltige Gas durchsetzen im Gleichstrom den rohrförmigen Strömungsreaktor (1) in einer Zeit von weniger als 10 Minuten, vorzugsweise 2 Minuten, wobei der pH-Wert abgesenkt wird;

c) nach Durchströmen des Strömungsreaktors (1) wird das in der Schwarzlauge enthaltene Restgas in einem Gasabscheider (4) abgeschieden;

d) das Abtrennen des abgesetzten Kieselsäureschlammes erfolgt durch Zentrifugation.

2. Verfahren nach Anspruch 1, dadurch gekennzeichnet, daß die Temperatur der Schwarzlauge während der pH-Wert-Absenkung annähernd beibehalten wird.

3. Verfahren nach Anspruch 2, dadurch gekennzeichnet, daß sich die Temperatur der Schwarzlauge während der pH-Wert-Absenkung um maximal bis zu 10°C gegenüber der zu Beginn der Absenkung des pH-Wertes vorhandenen Temperatur verringert.

4. Verfahren nach Anspruch 1, dadurch gekennzeichnet, daß während der pH-wert-Absenkung durch gleichzeitige Wärmezufuhr eine Aufkonzentration der Schwarzlauge erfolgt.

5. Verfahren nach Anspruch 1, dadurch gekennzeichnet, daß das CO$_2$-haltige Gas durch einen Düsenboden in Form feinster Bläschen in die Schwarzlauge eingeführt wird.

6. Verfahren nach Anspruch 1, dadurch gekennzeichnet, daß der Schwarzlauga zur Erhöhung der Absetzgeschwindigkeit des Kieselsäureschlammes vor oder nach der pH-Wert-Absenkung, jedoch vor der Zentrifugation, Flockungsmittel in feinkörniger Form zugesetzt werden.

7. Verfahren nach Anspruch 6, dadurch gekennzeichnet, daß als Flockungsmittel bereits abgetrennter, vorzugsweise getrockneter oder geglühter Kieselsäureschlamm Verwendung findet.

8. Verfahren nach Anspruch 6, gekennzeichnet durch Verwendung von Flockungsmitteln auf kationischer Basis, vorzugsweise von Kationen hoher Ladungsdichte, wie Fe$^{3+}$, Al$^{3+}$ Ca$^{2+}$

9. Verfahren nach Anspruch 6, insbesondere für eine Nutzung des abgetrenntem Kieselsäureschlammes, gekennzeichnet durch Verwendung von Flockungsmitteln auf organischer Basis.

10. Verfahren nach Anspruch 1, wobei die Schwarzlauge nach Absenkung ihres pH-Wertes und Abtrennung des abgesetzten Kieselsäureschlammes einer mehrstufigen Eindampfung unterworfen wird, dadurch gekennzeichnet, daß zwischen wenigstens zwei Eindampfstufen eine weitere Entkieselung der Schwarzlauge durch Absenkan das pH-Wertes und Abtrennen des abgesetztan Kiaselsäureschlammes mittels Zentrifugation erfolgt.

## Revendications

1. Procédé pour éliminer l'acide silicique de la liqueur noire étant produite lors de la préparation de la pâte à l'alcali avec une concentration de SiO$_2$ de 7 à 12 g/l, où le pH est abaissé à moins de 10 par introduction d'un gaz contenant du CO$_2$, l'abaissement du pH ne s'effectuant cependant qu'à tel point que le pH est encore dans le milieu alcalin et qu'il ne se produit pas de précipitation importante de la lignine, et où les boues de l'acide silicique sont ensuite séparées: procédé caractérisé par les particularités suivantes:

a) On utilise un réacteur d'écoulement tubulaire à l'entrée duquel le gaz contenant du CO$_2$ et étant sous pression augmentée, est injecte à division fine dans la liqueur noire:

b) la liqueur noire et le gaz contenant le $CO_2$ passent de même sens par le réacteur d'écoulement tubulaire (1) pendant une période de moins de 10 minutes, de préférence pendant 2 minutes, où le pH est abaissé:

c) après avoir passé par le réacteur d'écoulement (1), le gaz restant dans la liqueur noire, est séparé dans un séparateur de gaz (4):

d) la séparation des dépôts de boues d'acide silicique s'effectue par centrifugation.

2. Procédé selon la revendication 1, caractérisé en ce que la température de la liqueur noire est presque maintenue constante pendant l'abaissement du pH.

3. Procédé selon la revendication 2, caractérisé en ce que la température de la liqueur noire descend, pendant l'abaissement du pH, à tel point qu'elle est jusqu'à 10 °C au max. inférieure à la température existante au début de l'abaissement du pH.

4. Procédé selon la revendication 1, caractérisé en ce que la concentration de la liqueur noire est augmentée pendant l'abaissement du pH, par amenée simultanée de chaleur.

5. Procédé selon la revendication 1, caractérisé en ce que le gaz contenant du $CO_2$ est insufflé dans la liqueur noire sous forme de fines bulles à travers un plateau à tuyères.

6. Procédé selon la revendication 1, caractérisé en ce qu'il est ajouté à la liqueur noire des floculants à grains fins pour augmenter la vitesse de depôt des boues d'acide silicique avant ou après l'abaissement du pH, mais avant la centrifugation.

7. Procédé selon la revendication 6, caractérisé en ce qu'il est utilisé comme floculant, les boues d'acide silicique déjà séparées et de préférence séchées ou recuites.

8. Procédé selon la revendication 6, caractérisé en ce qu'il est utilisé des floculants à base cationique, de préférence à cations de haute densité de charge comme $Fe^{3+}$, $Al^{3+}$, $Ca^{2+}$.

9. Procédé selon la revendication 6, en particulier en vue de l'utilisation des boues d'acide silicique séparées, caractérisé en ce qu'il est utilisé des floculants à base organique.

10. Procédé selon la revendication 1, où la liqueur noire subit une évaporation en plusieurs échelons après l'abaissement de son pH et la séparation des boues d'acide silicique déposées, caractérisé en ce qu'il se produit un autre désiliciage entre au moins deux échelons d'évaporation, par abaissement du pH et séparation des boues d'acide silicique déposées, par centrifugation.

**Claims**

1. A method for removal of silicic acid from black lye of a $SiO_2$-concentration of 7-12 g/l, being produced in the course of alkaline pulp digestion and with the pH-value of the black lye being reduced to a value below 10, by injecting $CO_2$-containing gas, however to only such an extent that the pH-value is still within the alkaline range and that lignine sedimentation is negligible, with the mud sediment of silicic acid being subsequently separated, and the respective process being characterized by the following features:

a) A cylindrical flow reactor (1) is used, with the pressurized $CO_2$-containing gas being injected through nozzles uniformly distributed into the black lye at the reactor inlet side;

b) the black lye and the $CO_2$-containing gas are passing through the cylindrical flow reactor (1) in parallel flow during a period of time of less than 10 minutes, preferably during 2 minutes, and with the pH-value being reduced at the same time;

c) after having passed through the flow reactor (1), the residual gas still remaining in the black lye is removed in a gas separator (4);

d) the settled mud sediment of silicic acid is separated by centrifuging.

2. Method according to claim 1, characterized in that the black lye is maintained at almost the same temperature throughout the reduction of the pH-value.

3. Method according to claim 2, characterized in that the black lye temperature is reduced by 10° C, at maximum, during the pH-value reduction process, compared to the temperature prevailing at the beginning of the pH-value reduction process.

4. Method according to claim 1, characterized in that during the pH-value reduction process the black lye, is upgraded by simultaneous addition of heat.

5. Method according to claim 1, characterized in that the $CO_2$-containing gas is injected in the form of fine bubbles into the black lye through a nozzel plate.

6. Method according to claim 1, characterized in that a fine-grained flocculent is added to the black lye in order to speed-up the settling of the mud sediment of the silicic acid before or after the pH-value reduction process in any case, however, before centrifuging.

7. Method according to claim 6, characterized in that the flocculent used is supplied in the form of already separated mud sediment of silicic acid preferably being dried or annealed.

8. Method according to claim 6, characterized by using a flocculent on a cation base, preferably of cations of a high charge density, such as $Fe^{3+}$, $Al^{3+}$, $Ca^{2+}$.

9. Method according to claim 6, particularly for the utilization of the separated mud sediment of silicic acid characterized by using organic flocculents.

10. Method according to claim 1, in which the black lye is undergoing a multi-stage evaporation after the pH-value reduction and separation of the mud sediment of silicic acid, characterized in that at least between two evaporation stages a further desiliconization of the black lye is carried out by a pH-value reduction and separation of the mud sediment of silicic acid by centrifuging.

FIG. 1